# DEMANDE DE BREVET EUROPEEN

(11) **EP 2 302 625 A1**
(43) Date de publication de la demande: **30.03.2011**
(21) Numéro de dépôt: 10177599.7
(22) Date de dépôt: 20.09.2010
(51) Int. Cl.: G11B 7/005, G11B 7/125

(54) **Lecteur de disque optique en super-résolution et procédé de lecture optimisée par mesure d'amplitude**

(30) Priorité: 29.09.2009 FR 0904640
(71) Demandeur: Commissariat à l'Énergie Atomique et aux Énergies Alternatives, 75015 Paris (FR)
(72) Inventeur: Laulagnet, Fabien, 38600, FONTAINE (FR); Armand, Marie-Françoise, 38410, VAULNAVEYS LE HAUT (FR); Fargeix, Alain, 38330, MONTBONNOT SAINT MARTIN (FR); Hyot, Bérangère, 38320, EYBENS (FR)
(74) Mandataire: Guérin, Michel

(57) **Abrégé**

L'invention concerne le domaine de l'enregistrement optique d'informations sur un support tel qu'un disque optique.

Pour lire un disque optique en mode de super-résolution, on met en oeuvre un procédé d'optimisation de la puissance du faisceau laser de lecture. Cette optimisation repose sur la constatation de l'existence d'une corrélation entre la puissance permettant de lire sans risque en mode de super-résolution et l'amplitude du signal de lecture qui résulte de la lecture de marques ayant la plus petite dimension possible (marques 2T). On mesure l'amplitude (A) du disque optique pour plusieurs puissances (P) de valeurs décroissantes du laser de lecture, on observe la diminution d'amplitude. On sélectionne une puissance de lecture en fonction de la puissance pour laquelle on a constaté une décroissance (par exemple de 5%) de l'amplitude mesurée au départ.

## Description

L'invention concerne le domaine de l'enregistrement optique d'informations sur un support tel qu'un disque optique.

Les informations sont en principe stockées sur le support sous forme de marques physiques qui sont des singularités de dimensions contrôlées qui présentent un contraste optique permettant la lecture par un système de détection à faisceau laser.

Les marques physiques peuvent être des empreintes formées par moulage d'un substrat en polycarbonate (DVDROM par exemple) ; elles sont alors enregistrées une fois pour toutes ; elles peuvent être également constituées par des zones enregistrées dans des couches sensibles par l'action d'un faisceau lumineux d'écriture ; l'enregistrement peut alors être réversible (effacement possible, voire ré-enregistrement) ou irréversible (pas d'effacement possible ni de réécriture).

Lorsqu'on cherche à accroître la densité d'informations enregistrées sur un disque optique, on est en général limité par les performances du dispositif de lecture des informations. Le principe de base est que l'on ne peut pas lire des informations physiques inscrites dans le disque si leur dimension est inférieure à la limite de résolution du système optique qui servira à lire ces informations. Typiquement, avec une lecture par un laser rouge de longueur d'onde 650nm et une ouverture numérique de 0,6 on ne peut normalement pas espérer lire correctement des informations de dimension inférieure à 0,3 micromètre.

Cependant, des méthodes dites de super-résolution ont été imaginées pour lire des informations dont la dimension physique est inférieure à la limite de résolution optique (LR = (λ/4).NA) où λ est la résolution et NA l'ouverture numérique de l'optique de focalisation du laser. Ces méthodes se fondent sur les propriétés optiques non-linéaires de certains matériaux. Par propriétés non-linéaires, on entend le fait que certaines propriétés optiques du matériau changent en fonction de l'intensité de la lumière qu'ils reçoivent. Le laser de lecture lui-même va modifier localement les propriétés optiques du matériau par des effets thermiques, optiques, thermo-optiques et/ou optoélectroniques sur des dimensions plus petites que la dimension du spot laser de lecture ; du fait du changement de propriété, une information présente dans ce très petit volume devient détectable alors qu'elle n'aurait pas été détectable sans ce changement.

Le phénomène qu'on exploite est fondé principalement sur deux propriétés du laser de lecture qu'on va utiliser :
- d'une part le laser est focalisé très fortement de manière à présenter une section extrêmement petite (de l'ordre de la longueur d'onde) mais dont la distribution de puissance est gaussienne, très forte en son centre, très atténuée à la périphérie,
- et d'autre part, on choisit une puissance de laser de lecture telle que la densité de puissance sur une petite partie de la section, au centre du faisceau, modifie significativement une propriété optique de la couche, alors que la densité de puissance en dehors de cette petite portion de section ne modifie pas significativement cette propriété optique ; la propriété optique est modifiée dans un sens tendant à permettre la lecture d'une information qui ne serait pas lisible sans cette modification.

Par exemple, dans le cas de disques à super résolution, on a une augmentation locale de la réflectivité sur une zone plus petite que le diamètre du faisceau laser. C'est cette modification due aux propriétés optiques non linéaires qui va permettre la lecture de plus petites marques normalement indétectables.

Dans une précédente demande de brevet, déposée sous le numéro FR 0700938 le 9 février 2007, on a proposé une structure de stockage optique fonctionnant en super-résolution. Cette structure comprend un substrat (de préférence en polycarbonate) pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium (ZnS-SiO₂).

Cette structure est favorable parce qu'elle nécessite une puissance laser de lecture relativement faible pour lire les informations en super-résolution avec un rapport signal/bruit satisfaisant. Or la question de la puissance de lecture est critique car, d'un côté, une puissance suffisamment élevée est nécessaire pour obtenir un effet de super-résolution par changement localisé de propriétés optiques, mais d'un autre côté une puissance trop élevée tend à détruire progressivement l'information enregistrée, limitant le nombre de cycles de lecture possible alors qu'on souhaite un nombre de cycles de lecture aussi élevé que possible.

En faisant des essais sur ces structures à base de InSb ou GaSb entre deux couches de ZnS-SiO₂, on a cependant constaté que le choix de la puissance de lecture n'était pas simple, en ce sens qu'une puissance trop faible ne permet pas la lecture en super-résolution, une puissance trop forte est inutile ou dangereuse pour la conservation des informations ou même du support optique, et il semble qu'il existe une zone de puissance intermédiaire, inférieure à la puissance optimale qui permet la super-résolution, pour laquelle les informations stockées sont irrémédiablement dégradées par le laser de lecture.

Cette constatation a été faite à partir de mesures répétées sur des échantillons comportant des marques régulièrement réparties, enregistrées en super-résolution.

Il est donc souhaitable de prévoir que le système de lecture des informations optiques comporte des moyens pour optimiser la puissance du laser de lecture en prenant en compte ce risque de dégradation irréversible des informations pour les puissances intermédiaires inférieures à cette puissance optimale.

D'autre part, les normes d'enregistrement d'informations dans les disques optiques prévoient que les marques ont des longueurs normalisées qui s'expriment en multiples d'une dimension de base T qui correspond à la largeur des marques, les plus petites marques ayant une longueur 2T et les plus grandes 9T. Les marques de longueur 2T ne peuvent pas être lues sans mettre en oeuvre le mode de super-résolution, c'est-à-dire qu'elles ne sont pas visibles au moyen d'un faisceau laser qui (à la même longueur d'onde) n'aurait pas au centre du faisceau une densité de puissance suffisante pour modifier significativement les propriétés de la couche sensible.

Selon l'invention, on utilise les signaux résultant de la lecture d'une série de marques dont les dimensions se situent en-dessous de la limite de résolution (il n'est pas indispensable d'utiliser la plus petite marque sur laquelle on aurait moins de précision que sur une marque plus grande mais se situant toujours en-dessous de la limite de résolution optique), avec plusieurs puissances différentes, pour déterminer une courbe de variation d'amplitude, en déduire une puissance de lecture qui permet de lire de manière fiable les marques en super-résolution, et appliquer ensuite cette puissance de lecture au laser pour lire les informations du disque optique.

C'est pourquoi on propose un lecteur de disque optique fonctionnant en mode de super-résolution et comportant un laser de lecture, adapté à la lecture de disques optiques dont la structure comprend un substrat pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium (ZnS-SiO₂), le lecteur étant **caractérisé en ce qu**'il comporte des moyens pour faire varier la puissance du laser de lecture, des moyens pour mesurer une amplitude du signal de lecture de marques enregistrées ayant la plus petite dimension possible pour une lecture en super-résolution, pour plusieurs puissances décroissantes du laser de lecture à partir d'une valeur maximale prédéterminée, des moyens pour déterminer une puissance de lecture Pa pour laquelle l'amplitude descend au-dessous d'une valeur k1.A0, où A0 est l'amplitude de la première valeur mesurée ou l'amplitude moyenne des premières valeurs mesurées, et k1 est un coefficient qui est inférieur à 1 et de préférence compris entre 0,85 et 0,95, des moyens pour arrêter les mesures pour cette puissance Pa, et des moyens pour appliquer une puissance de lecture PL pour une lecture ultérieure d'informations présentes sur le disque, où PL est égale à k.Pa, k étant un coefficient supérieur ou égal à 1.

L'amplitude mesurée doit être considérée ici comme une variation relative de niveau de signal entre une marque (amplitude minimale) et une absence de marque (amplitude maximale). En effet, c'est ce sont les alternances de marques et absences de marques qui engendrent un signal ayant une amplitude et cette amplitude est indépendante de la puissance lorsque les marques sont correctement lues en super-résolution. L'amplitude mesurée est une amplitude crête à crête (min-max).

La mesure d'amplitude est de préférence faite dans une zone dédiée du disque optique, cette zone ne comportant pas d'informations utiles autres que celles qui sont nécessaires à la mesure, à savoir des séries de marques 2T (marques de plus petite dimension lisible en super-résolution) ; on réitère de préférence les mesures d'amplitude et la sélection d'une puissance de lecture à chaque nouvelle introduction d'un disque dans le lecteur.

D'autres caractéristiques et avantages de l'invention apparaîtront à la lecture de la description détaillée qui suit et qui est faite en référence aux dessins annexés dans lesquels :
- la figure 1 représente un exemple de structure d'un disque optique ;
- la figure 2 représente une vue au microscope à force atomique d'un substrat dans lequel ont été préformées des marques de 80 nanomètres minimum espacées de 80 nanomètres minimum ;
- la figure 3 représente une courbe d'amplitude mesurée pour cette structure, en fonction de la puissance du laser de lecture, et pour la lecture de marques de petite dimension 2T ;

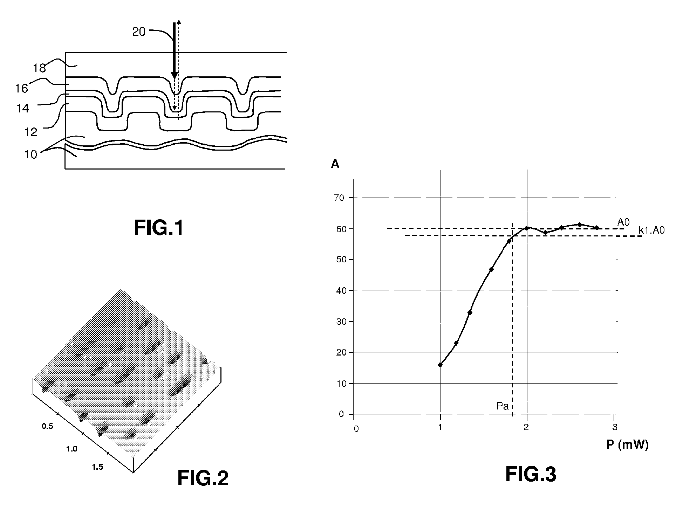

Sur la figure 1, on a représenté la structure générale d'un disque optique pouvant être lu en mode de super-résolution. Il comprend un substrat 10, qui est de préférence un matériau organique, et notamment du polycarbonate classiquement utilisé pour des disques optiques. Les informations sont classiquement inscrites dans le disque sur des pistes sensiblement concentriques ; un faisceau laser de lecture, symbolisé par la flèche 20, placé devant le disque, verra les informations défiler devant lui lors de la rotation du disque.

Le substrat 10 comporte des marques physiques définissant l'information enregistrée, et dans cet exemple les marques physiques sont constituées sous forme d'un relief imprimé à la surface supérieure du substrat. Le relief est par exemple constitué de creux dont la largeur est à peu près fixe pour toutes les informations inscrites, mais dont la longueur et l'espacement, dans le sens de défilement des informations, définissent le contenu de l'information inscrite. La lecture des informations se fait par analyse de la phase du faisceau laser réfléchi par la structure, phase qui varie au début et à la fin du passage de chaque marque physique. Les creux peuvent être préenregistrés par pressage du polycarbonate ou du substrat plastique par exemple à l'aide d'un moule en nickel qui a été réalisé à partir d'outils de gravure à faisceaux d'électrons de très haute résolution.

La largeur, la longueur, l'espacement des marques physiques peuvent être inférieures à la résolution optique théorique du système optique de lecture qui servira à les lire. Typiquement, s'il s'agit d'un laser bleu de longueur d'onde 400 nanomètres environ, utilisé avec une optique de focalisation dont l'ouverture numérique est de 0,85, la limite physique théorique de résolution est de l'ordre de 120 nanomètres en prenant des précautions. Ici, les marques peuvent être préenregistrées avec une résolution, en longueur ou en espacement, inférieure à 80 nanomètres. La figure 2 représente une vue schématique des marques physiques en relief ainsi enregistrées sur un disque.

Dans le cas d'un disque optique classique, on recouvrirait le relief d'une simple couche d'aluminium, mais cette couche d'aluminium ne permettrait pas de détecter avec un laser bleu des marques de dimensions et d'espacement égal à 80 nanomètres.

Pour permettre une telle détection, on recouvre les marques d'une structure sensible permettant une détection en super-résolution. La structure comprend une triple couche constituée dans l'ordre par une couche diélectrique 12 de composé ZnS-SiO₂, une couche 14 d'antimoniure d'indium (InSb) ou antimoniure de gallium (GaSb), et une couche diélectrique 16 de composé ZnS-SiO₂. L'ensemble est recouvert par une couche de protection transparente 18. La couche 14 en InSb ou GaSb est une couche à propriétés optiques non linéaires.

Un tel disque peut être lu par un lecteur comprenant un laser bleu émettant un faisceau de puissance de 1 à 3 milliwatts environ (correspondant en pratique à une densité de puissance d'environ 7 milliwatts par micromètre carré).

Mais la structure sensible est fragile et on a constaté que les informations inscrites pouvaient se dégrader pour certaines gammes de puissances, soit trop élevées, soit même inférieures à la puissance qui est nécessaire pour pouvoir effectuer la lecture en super-résolution. Il faut donc essayer d'éviter que le laser de lecture n'émette une puissance provoquant des risques de dégradation. Le fabricant de lecteur de disques prévoira en principe un fonctionnement à une puissance qui minimise les risques. La puissance sera donc calibrée en fonction des indications du fabricant de disques ou des normes relatives à ces disques lorsqu'elles existeront.

Cependant, un tel calibrage n'optimise pas le choix de la puissance si on considère qu'il peut y avoir des variations de la puissance optimale en fonction des fabricants ou du procédé industriel de fabrication, ou même en fonction des séries fabriquées par un même fabricant et par le même procédé.

En faisant des expérimentations sur des structures sensibles permettant un fonctionnement en super-résolution, on a constaté qu'il existait un certain type de relation entre l'amplitude du signal de lecture des marques de très petites dimensions de la couche sensible et la puissance émise par le faisceau laser de lecture ; l'amplitude est sensiblement constante dès lors que le laser a une puissance qui permet de fonctionner en mode de super-résolution, mais l'amplitude décroît si la puissance diminue. Lorsqu'elle a fortement décru, on sait que le laser ne fonctionne plus du tout en mode de super-résolution. Lorsqu'elle n'a que peu décru, on sait qu'on fonctionne en mode de super-résolution mais on a constaté que le fonctionnement est à risque, en ce sens que des puissances trop proches du seuil de passage en mode de super-résolution tendent à dégrader irréversiblement les informations contenues dans le disque.

C'est pourquoi on cherche selon l'invention a éviter cette zone de transition.

La figure 3 représente une courbe d'amplitude du signal de lecture fourni par la tête de lecture du lecteur de disque, en fonction de la puissance du faisceau laser émis. La puissance est en milliwatts, l'amplitude est en unités arbitraires ; le faisceau laser émet à une longueur d'onde de 405 nanomètres ; le signal est celui qui résulte de la lecture de marques ayant la plus petite dimension possible 2T selon la norme d'enregistrement du disque optique considéré. Pour la couche sensible qui correspond à cette courbe, on peut lire en super-résolution à partir d'une puissance d'environ 1,5 milliwatts, alors qu'au-dessous de cette puissance on ne peut que difficilement lire ces marques 2T en raison de l'absence d'effet de super-résolution.

Mais on a observé que la zone de transition dans laquelle l'amplitude croît avec la puissance est une zone à risque : elle correspond à des puissances qui permettent un peu la lecture en super-résolution mais avec risque de dégradation des informations. On considère que la zone à risque est située entre environ 1,2 milliwatts et 1,7 milliwatts.

Selon l'invention, le lecteur de disque est pourvu de moyens pour mesurer l'amplitude du signal de lecture engendré par des marques 2T, pour plusieurs puissances possibles, et des moyens pour déduire de ces mesures une puissance de lecture à appliquer ultérieurement pour la lecture des informations utiles du disque.

La méthode préférée consiste à mesurer l'amplitude du signal de lecture pour des valeurs décroissantes de la puissance de lecture, à partir d'une valeur maximale prédéterminée. La valeur maximale est par exemple de 3 watts pour un disque optique qui aurait une courbe de réponse du genre de celle de la figure 3.

Dès que l'amplitude du signal commence à baisse significativement, par exemple de 5%, on considère qu'on entre dans la zone à risque.

Si l'amplitude de la première lecture (ou alternativement la moyenne des amplitudes des premières lectures, par exemple des trois ou quatre premières lectures)est A0. On note Pa la valeur de puissance pour laquelle on constate que l'amplitude détectée est égale à k1.A0.

On sélectionne comme puissance de lecture pour le laser, en vue de lire les informations utiles stockées dans le disque, une puissance PL=k.Pa, k étant de préférence supérieur à 1. Par exemple, k est compris entre 1 et 1,2.

Dans l'exemple de la courbe de la figure 3, avec k1 = 0,95 on trouverait une puissance Pa d'environ +1,8mW et on pourrait sélectionner une puissance de lecture de 1,8 mW si on choisit k=1, ou 2,1 mW si k=1,1.

En effectuant une mesure d'amplitude pour des puissances décroissantes, donc situées a priori hors de la zone à risque, on évite d'appliquer une puissance qui dégraderait le matériau de la couche sensible dans la zone où sont inscrites les marques 2T servant à cette mesure.

Des mesures expérimentales sur des structures de couches sensibles commercialisées permettront de savoir quelle valeur de k permet d'assurer une sécurité suffisante pour tenir compte de la dispersion des fabrications de disque. Un nombre k trop petit risque de conduire à une puissance de lecture qui ne sort pas suffisamment de la zone de dégradation. Un nombre k trop grand conduit à une puissance de lecture excessive par rapport aux besoins de la lecture en super-résolution.

Pour déterminer la puissance à laquelle on effectuera la première mesure, on se basera sur les indications nominales données par le fabricant du disque. On prendra par exemple une puissance de 30% supérieure à la puissance nominale de lecture en super-résolution indiquée par le fabricant.

Les tests sont faits dans une zone de disque optique réservée à cet effet, ne comportant pas d'informations utiles mais comportant des marques physiques de dimension 2T. La mesure se fait avec le disque en rotation à une vitesse qui correspond à la vitesse linéaire normalisée (typiquement une vitesse donnant un débit de 66Mbits/seconde). Si le disque doit être lu à plus haute vitesse, il faut réaliser un test à plus haute vitesse car la puissance optimale dépend de la vitesse de défilement des marques sous le faisceau laser. Plus généralement, un test pour plusieurs vitesses est préconisé.

On effectuera le test par exemple à chaque nouvelle introduction d'un disque optique dans le lecteur.

## Revendications

1. Lecteur de disque optique fonctionnant en mode de super-résolution et comportant un laser de lecture, adapté à la lecture de disques optiques dont la structure comprend un substrat pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium (ZnS-SiO₂), le lecteur étant **caractérisé en ce qu'**il comporte des moyens pour faire varier la puissance du laser de lecture, des moyens pour mesurer une amplitude du signal de lecture de marques enregistrées ayant la plus petite dimension possible pour une lecture en super-résolution, pour plusieurs puissances décroissantes du laser de lecture à partir d'une valeur maximale prédéterminée, des moyens pour déterminer une puissance de lecture Pa pour laquelle l'amplitude descend au-dessous d'une valeur k1.A0, où A0 est l'amplitude de la première valeur mesurée ou l'amplitude moyenne des premières valeurs mesurées, et k1 est un coefficient qui est inférieur à 1 et de préférence compris entre 0,85 et 0,95, des moyens pour arrêter les mesures pour cette puissance Pa, et des moyens pour appliquer une puissance de lecture PL pour une lecture ultérieure d'informations présentes sur le disque, où PL est égale à k.Pa, k étant un coefficient supérieur ou égal à 1.

2. Lecteur de disque selon la revendication 1, **caractérisé en ce que** les moyens pour effectuer la mesure d'amplitude de signal sont agencés pour effectuer la mesure dans une zone dédiée d'un disque lu par le lecteur, cette zone ne comportant pas d'informations utiles autres que les marques destinées à la mesure.

3. Lecteur de disque selon l'une des revendications 1 et 2, **caractérisé en ce que** les moyens de mesure, de détermination de la puissance souhaitable, et d'application de cette puissance au laser de lecture sont agencés pour effectuer la mesure, la détermination, et l'application de la puissance déterminée à chaque nouvelle introduction d'un disque dans le lecteur.

4. Procédé de lecture de disque optique au moyen d'un laser de lecture fonctionnant en mode de super-résolution, adapté à la lecture de disques optiques dont la structure comprend un substrat pourvu de marques physiques dont la configuration géométrique définit l'information enregistrée, une superposition de trois couches au-dessus des marques du substrat, et une couche de protection transparente au-dessus de cette superposition, la superposition comprenant une couche d'antimoniure d'indium ou de gallium insérée entre deux couches diélectriques d'un composé de sulfure de zinc et d'oxyde de silicium, **caractérisé en ce qu'**on mesure l'amplitude des signaux résultant de la lecture d'une série de marques ayant la plus petite dimension possible, pour plusieurs puissances différentes à partir d'une valeur maximale prédéterminée, on détermine une courbe de variation d'amplitude et une puissance de lecture Pa pour laquelle l'amplitude descend au-dessous d'une valeur k1.A0, où A0 est l'amplitude de la première valeur mesurée ou l'amplitude moyenne des premières valeurs mesurées, et k1 est un coefficient qui est inférieur à 1 et de préférence compris entre 0,85 et 0,95, on arrête les mesures pour cette puissance Pa, et on applique ensuite au laser pour lire les informations du disque optique une puissance de lecture PL égale à k.Pa, k étant un coefficient supérieur ou égal à 1.

5. Procédé de lecture selon la revendication 4, **caractérisé en ce que** la mesure d'amplitude est faite dans une zone dédiée du disque optique, cette zone ne comportant pas d'informations utiles autres que des séries de marques de la plus petite dimension lisible en super-résolution.

6. Procédé selon l'une des revendications 4 et 5, **caractérisé en ce qu'**on réitère les mesures d'amplitude et la sélection d'une puissance de lecture à chaque nouvelle introduction d'un disque dans le lecteur.
